# EUROPÄISCHE PATENTSCHRIFT

(11) **EP 0 512 479 B1**
(45) Veröffentlichungstag und Bekanntmachung des Hinweises auf die Patenterteilung: **28.02.1996**
(21) Anmeldenummer: 92107580.0
(22) Anmeldetag: 05.05.1992
(51) Int. Cl.: C04B 28/26, C08L 97/02, E04B 1/80

(54) **Platte und Verfahren zu deren Herstellung**
Flat panel and method for fabricating it
Panneau et procédé pour sa fabrication

(30) Priorität: 06.05.1991 DE 4114755
(43) Veröffentlichungstag der Anmeldung: 11.11.1992
(73) Patentinhaber: Bison-Werke Bähre & Greten GmbH & Co. KG, D-31832 Springe (DE)
(72) Erfinder: Heller, Wolfgang, Dipl.-Holzwirt, W-3250 Hameln (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 127 575
- CH-A- 192 797
- DE-A- 2 636 313
- DE-U- 7 913 609

## Beschreibung

Die Erfindung betrifft eine Platte aus mit einer Wasserglas und gegebenenfalls ein Flammschutzmittel enthaltenden Leimflotte versetzten Teilchen und ein Verfahren zu deren Herstellung.

Es ist bekannt, daß das sehr billige mineralische Bindemittel Wasserglas zwar zum Kleben von Papier, Kartonagen und in der Wellpappeherstellung eingsetzt wird, aber in Holzspanplatten allein keine ausreichende Festigkeit, Feuchtebestandigkeit und Feuerhemmung bewirkt. Wasserglasgebundene Holzspanplatten können daher nur für untergeordnete Zwecke verwendet werden, oder es sind zusätzliche Maßnahmen erforderlich (DE-PS 847 496, DE-OS 26 36 313, DE-OS 37 18 297, DE-OS 39 04 729, DE-OS 39 20 218).

Aus der DE 26 36 313 A1 ist ein Verfahren zur Herstellung von mineralisch gebundenen unter Einsatz von Holzspänen bekannt, wobei das Spänematerial beleimt, zu Platten gestreut und unter Einwirkung von Wärme verpreßt wird. Als Bindemittel kann dabei eine wässrige Lösung aus Wasserglas und Poraten Verwendung finden.

Aufgabe der Erfindung ist es, eine Platte der eingangs genannten Art zu schaffen, die vollwertige Gebrauchseigenschaften aufweist und wirtschaftlich herstellbar ist.

Diese Aufgabe wird nach der Erfindung durch die Merkmale des Patentanspruchs 1 gelöst.

Damit ist eine umweltfreundliche und preiswerte Dämm-Leichtbau-Platte gegeben, die im Vergleich zu bekannten Dämmstoffen, seien es beispielsweise Styropor- oder Bitumen-Dämmplatten, nicht nur im wesentlichen aufgrund ihrer Ausgangsstoffe kostengünstiger hergestellt werden kann, sondern auch vom Erdöl oder einem anderen Primärrohstoff unabhängig ist.

Überraschenderweise hat die erfindungsgemäße Platte auch hinsichtlich Festigkeit und Wärmeschutz gute Gebrauchseigenschaften, und sie ist praktisch sogar nicht entflammbar, das heißt, sie brennt weder abtropfend nach noch entwickelt sie im Brandfall Styrol-Gas.

Diese Eigenschaften dürften darauf zurückzuführen sein, daß die Altpapierteilchen oder dergleichen durch die Bestandteile der Leimflotte gewissermaßen überwiegend bis ausschließlich vollzellgetränkt bzw. vollzellimprägniert werden.

Erreicht wird ferner eine ausreichende Eigenstabilität der Dämm-Leichtbau-Platte für ihren Transport und ihre Montage und außerdem zumindest ihre Schwerentflammbarkeit, da Wasserglas selbst ein Feuerschutzmittel und gleichzeitig ein Bindemittel ist.

Von Vorteil ist es, Altpapier- bzw. Abfallpapierteilchen zu verwenden, die durch Zerreißen gebildet werden und unregelmäßige Form und unterschiedliche Größe besitzen. Überwiegend sollen die Teilchen dabei Abmessungen im Bereich von etwa 4 mm bis 10 mm aufweisen, und sie sind zumindest zum Teil in der fertigen Platte in ein- oder mehrfach gefaltetem Zustand verpreßt, so daß sich in der fertigen Platte Lufteinschlüsse unterschiedlicher Raumform ergeben, was für die Dämmeigenschaften von Vorteil ist.

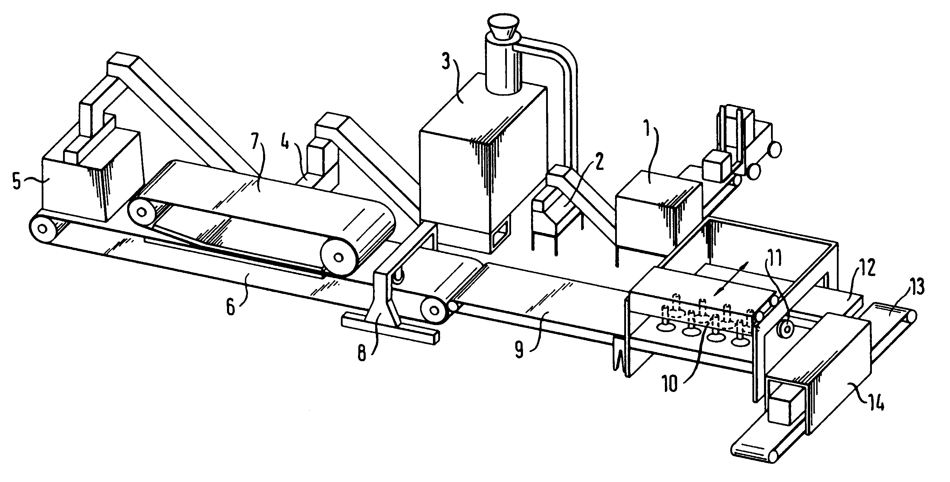

Weitere vorteilhafte Merkmale der Erfindung sind in den Unteransprüchen angegeben. Ein Ausführungsbeispiel einer Anlage zur Herstellung erfindungsgemäßer Platten ist in der einzigen Figur der Zeichnung gezeigt.

Nach der Zeichnung umfaßt eine Anlage zur Herstellung erfindungsgemäßer Platten einen Ballenreißer 1, auf den eine Hammermühle 2 folgt, deren Auslaß über eine Förderleitung mit einem Bunker 3 verbunden ist.

Vom Bunker 3 gelangen die kleinflächig zerrissenen Teilchen zu einer Beleimstation 4 und von dieser zu einer Formmaschine 5, die oberhalb eines Formbandes 6 angeordnet ist.

Unterhalb des endlos ausgebildeten Formbandes 6 befindet sich ein einen vorgebbaren Abstand von der Formmaschine 5 aufweisendes, flächig ausgebildetes unteres Heizelement, das mit einem oberen Heizelement zusammenwirkt, welches auf der Innenseite eines endlosen Oberbandes 7 gegenüberliegend dem unteren Heizelement angeordnet ist.

Die beiden flächigen und in ihren Querabmessungen den Formbändern 6, 7 im wesentlichen angepaßten Heizelemente legen zusammen mit den Formbändern 6, 7 einen sich in Transportrichtung des von der Formmaschine 5 gebildeten Vlieses verjüngenden Einlaufspalt fest, der in einen Bereich konstanten Abstandes zwischen den Heizelementen und damit auch zwischen den Formbändern 6 und 7 übergeht.

Im Bereich des Formbandes und im Anschluß an das Oberband 7 ist eine mitfahrende Trennsäge 8 vorgesehen. An das Formband 6 schließt sich ein Beschleunigungsband 9 an.

Dieses Beschleunigungsband 9 führt zu einer Vakuum-Transportanlage 10 für die hergestellten Platten, und auf diese vorzugsweise fahrbar ausgebildete Transport-Anlage 10 folgen Aufteilsägen 11, ein Abstapeltisch 12, ein Transportband 13 sowie eine zur Verpackung der Platten vorgesehene Folienschrumpfanlage 14.

In der Beleimungsstation 14 wird die Leimflotte, deren Bindemittelanteil aus Wasserglas besteht, durch Bedüsung aufgebracht, und es wird eine Durchmischung vorgesehen.

Mittels der Formstation 5 wird auf dem Formband 6 ein einschichtiges und stabile Kanten aufweisendes Vlies einer vorgegebenen Dicke geschüttet oder wurfgestreut. Anschließend erfolgt unter Wärmezufuhr bei circa 200°C eine Verdichtung auf den jeweiligen Sollwert, wobei ein zweckmäßiges Verdichtungsverhältnis etwa 6 : 1 beträgt und die Verdichtung in dem sich verjüngenden Spalt zwischen den Heizplatten vorgenommen wird, während im Bereich konstanten Abstandes zwischen den Heizplatten keine aktive Druckanwendung mehr erfolgt und das Vlies gleichsam drucklos in den Platten-Endzustand gebracht wird.

Der erhaltene Dämm-Leichtbau-Plattenstrang kann eine Dicke von circa 10 mm bis circa 50 mm aufweisen, härtet zumindest weitestgehend aus und wird nach Längsbesäumung in die jeweils gewünschten Plattenformate aufgeteilt. Eine Endaushärtung des Bindemittels kann im Plattenstapel erfolgen.

Vorzugsweise wird der Plattenstapel folienschrumpfverpackt. Die Rohdichte der Platten liegt bevorzugt zwischen etwa 170 kg/m³ und etwa 200 kg/m³.

Die baubiologisch unbedenkliche Dämm-Leichtbau-Platte nach der Erfindung läßt sich unter anderem in der Fertighausindustrie problemlos sehr leicht und einfach mit einem geeigneten Kleber aufklebbar, womit ein alternativ mögliches Nageln, Bohren und Schrauben entfällt, und auf der Sichtfläche kann sie selbst Putzträger für Kunststoffe oder dergleichen sein.

Im Rahmen der Erfindung liegt es, die einzelnen Verfahrensschritte sowohl diskontinuierlich als auch kontinuierlich oder zum Teil kontinuierlich und zum Teil diskontinuierlich durchzuführen, ohne daß sich Beeinträchtigungen der Dämm-Leichtbau-Platte ergeben würden.

## Patentansprüche

1. Platte aus mit einer Wasserglas und gegebenenfalls ein Flammschutzmittel enthaltenden Leimflotte versetzten Teilchen, bei der
a) die Teilchen ausschließlich aus zerkleinerten Abfallpapierteilchen bestehen,
b) Wasserglas als alleiniges Bindemittel verwendet ist,
c) das Verhältnis der Gewichtsprozente der Leimflotte zu den Abfallpapierteilchen bis zu 40 % : 60 % beträgt und
d) die Platte als einschichtig homogene Dämm-Leichtbau-Platte eine Dicke von circa 10 mm bis circa 50 mm und eine Rohdichte zwischen etwa 170 kg/m³ und etwa 200 kg/m³ besitzt.

2. Platte nach Anspruch 1,
dadurch **gekennzeichnet,**
daß zumindest zwischen einem Anteil der Gesamtteilchen Lufteinschlüsse unterschiedlicher Raumform vorgesehen sind.

3. Platte nach einem der vorhergehenden Ansprüche,
dadurch **gekennzeichnet,**
daß die Leimflotte ein zusätzliches geeignetes und handelsübliches Flammschutzmittel und / oder einen geeigneten und handelsüblichen Härtungsbeschleuniger enthalten kann.

4. Platte nach einem der vorhergehenden Ansprüche,
dadurch **gekennzeichnet,**
daß sich die Leimflotte, bezogen auf 6,3 Gewichtsteile Altpapierteilchen, aus einem Gemisch von 1 Gewichtsteil Wasserglas, 1 Gewichtsteil Wasser und 0,1 Gewichtsteil Flammschutzmittel zusammensetzt.

5. Platte nach einem oder mehreren der vorhergehenden Ansprüche,
dadurch **gekennzeichnet,**
daß als Wasserglas bevorzugt Natronwasserglas mit einer Grädigkeit bis 60° Baumé, vorzugsweise 55° Baumé verwendet ist.

6. Platte nach einem oder mehreren der vorhergehenden Ansprüche,
dadurch **gekennzeichnet,**
daß ein- und insbesondere beidseitig und insbesondere auch an den Schmalflächen eine wasser- und / oder dampfdichte Beschichtung vorgesehen ist.

7. Verfahren zur Herstellung einer Platte nach einem oder mehreren der vorhergehenden Ansprüche, bei dem zerkleinertes Recycling-Material nacheinander gebunkert, mit einer Leimflotte versetzt, in Vliesform überführt, das Vlies verdichtet und unmittelbar anschließend im Spalt zwischen zwei Heizplatten vorzugsweise kontinuierlich bei etwa 200°C ohne aktive Druckanwendung, also gleichsam drucklos in den Endzustand gebracht wird.

8. Verfahren nach Anspruch 7,
dadurch **gekennzeichnet,**
daß das Vlies auf den jeweiligen Sollwert unter Wärmezufuhr von etwa 200°C bei einem Verdichtungsverhältnis von beispielsweise 6 : 1 verdichtet wird.

9. Verfahren nach Anspruch 7 oder 8,
dadurch **gekennzeichnet,**
daß die mechanisch durch einen Ballenreißer oder dergleichen zerkleinerten Altpapierteilchen vorzugsweise in einer Hammermühle zu Altpapierflocken mechanisch nachzerkleinert werden und die Bildung des Vlieses insbesondere unter Verwendung von Auflöse- und Verteilwalzen durch Schütten oder Wurfstreuen erfolgt, wobei vorzugsweise die einzelnen Verfahrensschritte sowohl diskontinuierlich als auch kontinuierlich oder zum Teil kontinuierlich und zum Teil diskontinuierlich durchgeführt werden.

10. Verfahren nach einem der Ansprüche 7 bis 9,
dadurch **gekennzeichnet,**
daß die Teilchen während der Überführung vom Bunker zur Vliesformmaschine mit der Leimflotte versetzt werden, und zwar insbesondere durch Aufdüsen oder Aufsprühen.

11. Verfahren nach einem der Ansprüche 7 bis 10,
dadurch **gekennzeichnet,**
daß die Endaushärtung des aus Wasserglas bestehenden Bindemittels im Plattenstapel erfolgt.

## Claims

1. Board comprising particles with an admixed glue mixture containing waterglass and optionally a flame-protection agent, wherein
a) the particles consist exclusively of comminuted waste paper particles,
b) waterglass is used as the sole binder,
c) the ratio of the percentage by weight of the glue mixture to the waste paper particles amounts to 40 % : 60 % by weight, and
d) the board forming a single-layer, homogenous insulating board for lightweight construction has a thickness of ca. 10 mm up to ca. 50 mm and has a gross density between approximately 170 kg/m³ and approximately 200 kg/m³.

2. Board in accordance with claim 1, characterised in that air inclusions of different spatial shape are provided at least between a proportion of the total particles.

3. Board in accordance with one of the preceding claims, characterised in that the glue mixture can contain an additionally suitable and commercially available flame-protection agent and/or a suitable commercially available hardening accelerator.

4. Board in accordance with one of the preceding claims, characterised in that the glue mixture is composed, related to 6.3 parts by weight of waste paper particles, of a mixture of 1 part by weight waterglass, 1 part by weight of water, and 0.1 part by weight of flame-protection agent.

5. Board in accordance with one or more of the preceding claims, characterised in that sodium waterglass with a concentration of 60° Baumé, preferably 55° Baumé, is used as waterglass.

6. Board in accordance with one or more of the preceding claims, characterised in that a water-tight and/or vapour-tight coating is provided at one side, and in particular on both sides, and especially also at the narrow sides.

7. Method for the manufacture of a board in accordance with one or more of the preceding claims, wherein the comminuted recycling material is sequentially bunkered, mixed with a glue mixture, brought into mat form, and the mat is compressed and subsequently brought into the end state in the gap between two heated plates directly without the active application of pressure, i.e. almost without pressure, and preferably continuously at approximately 200°C.

8. Method in accordance with claim 7, characterised in that the mat is compressed to the respective desired value with the supply of heat of approximately 200°C at a compression ratio of for example 6:1.

9. Method in accordance with claim 7 or claim 8, characterised in that the old paper particles, which are mechanically comminuted by a bale ripper or the like, are preferably subsequently comminuted in a hammer mill to form flocks of old paper, and in that the formation of the mat takes place by heaping or throw-scattering, in particular using opening and distribution rolls, with the individual method steps preferably being carried out both discontinuously and also continuously or partly continuously and partly discontinuously.

10. Method in accordance with one of the claims 7 to 9, characterised in that the particles are mixed with the glue mixture during the transfer from the bunker to the mat-forming machine, and indeed by application through a nozzle or by spraying.

11. Method in accordance with one of the claims 7 to 10, characterised in that the final curing of the binder consisting of waterglass takes place in the board stack.

## Revendications

1. Panneau de particules mélangées avec un bain de collage comprenant des silicates et le cas échéant des produits ignifuges, dans lequel :
a) les particules sont exclusivement constituées de particules de papier de rebut déchiqueté,
b) on utilise comme unique liant des silicates,
c) le rapport entre le bain de collage et les particules de papier de rebut s'élève, en pourcentage en poids, jusqu'à 40% : 60%, et
d) le panneau, sous forme d'un panneau de construction légère isolant homogène et mono-couche présente une épaisseur d'environ 10 mm jusqu'à environ 50 mm et une densité brute entre environ 170 kg/m³ et environ 200 kg/m³.

2. Panneau selon la revendication 1, caractérisé en ce qu'il est prévu des inclusion d'air de formes géométriques différentes au moins entre une partie de l'ensemble des particules.

3. Panneau selon l'une quelconque des revendications précédentes, caractérisé en ce que le bain de collage contient un produit ignifuge additionnel approprié et courant dans le commerce, et/ou un accélérateur de durcissement approprié et courant dans le commerce.

4. Panneau selon l'une quelconque des revendications précédentes, caractérisé en ce que le bain de collage, rapporté à 6,3 parties en poids de particules de papier de rebut, est composé d'un mélange formé par 1 partie en poids de silicates, 1 partie en poids d'eau et 0,1 partie en poids de produits ignifuges.

5. Panneau selon l'une ou plusieurs des revendications précédentes, caractérisé en ce qu'on utilise en tant que silicates de préférence des silicates de sodium avec une concentration allant jusqu'à 60° Baumé, de préférence 55° Baumé.

6. Panneau selon l'une ou plusieurs des revendications précédentes, caractérisé en ce qu'il est prévu un revêtement hydrofuge et/ou anti-vapeur sur un et en particulier sur les deux côtés, et en particulier également sur les faces étroites.

7. Procédé de fabrication d'un panneau selon l'une ou plusieurs des revendications précédentes, dans lequel des produits de récupération déchiquetés sont mis en silo les uns après les autres, mélangés avec un bain de collage et transformés sous forme d'une nappe, la nappe est comprimée, et immédiatement ensuite, amenée dans la condition finale dans la fente entre deux plaques chauffantes, de préférence en continu à une température d'environ 200°C sans application de pression active, donc pratiquement sans pression.

8. Procédé selon la revendication 7, caractérisé en ce que la nappe est comprimée à la valeur de consigne respective, avec admission de chaleur à environ 200° C, sous un rapport de compression de par exemple 6 : 1.

9. Procédé selon l'une ou l'autre des revendications 7 et 8, caractérisé en ce que les particules de papier de rebut déchiquetées mécaniquement dans un broyeur à billes ou similaire, sont à nouveau broyées mécaniquement en flocons de papier dans un moulin à marteaux, et que la formation de la nappe a lieu en particulier en utilisant des cylindres d'ameublissement et de répartition, par secouage ou par projection, et les étapes individuelles du procédé sont mises en oeuvre avantageusement de manière tant discontinue que continue, ou en partie de manière continue et en partie de manière discontinue.

10. Procédé selon l'une quelconque des revendications 7 à 9, caractérisé en ce que pendant le transfert du silo jusqu'à la machine de formation de nappe, les particules sont mélangées avec le bain de collage, et ceci en particulier par pulvérisation ou par projection.

11. Procédé selon l'une quelconque des revendications 7 à 10, caractérisé en ce que le durcissement final du liant constitué par les silicates a lieu dans la pile de panneaux.
